# EUROPÄISCHE PATENTSCHRIFT

(11) **EP 4 076 927 B1**
(45) Veröffentlichungstag und Bekanntmachung des Hinweises auf die Patenterteilung: **31.01.2024**
(21) Anmeldenummer: 20845373.8
(22) Anmeldetag: 16.12.2020
(51) Int. Cl.: B30B 5/06, B29C 43/22, B29C 43/48, B29C 43/36

(54) **DOPPELBANDPRESSE MIT ZUMINDEST EINER PRESSVORRICHTUNG**
DOUBLE BELT PRESS COMPRISING AT LEAST ONE PRESSING DEVICE
PRESSE À DOUBLE BANDE COMPRENANT AU MOINS UN DISPOSITIF DE PRESSION

(30) Priorität: 19.12.2019 AT 511282019
(43) Veröffentlichungstag der Anmeldung: 26.10.2022
(73) Patentinhaber: Berndorf Band GmbH, 2560 Berndorf (AT)
(72) Erfinder: KAGER, Franz, 2320 Schwechat (AT)
(74) Vertreter: Burger, Hannes
(86) Internationale Anmeldenummer: PCT/AT2020/060468
(87) Internationale Veröffentlichungsnummer: WO 2021/119701

(56) Entgegenhaltungen:
- EP-A1- 0 530 450
- EP-A2- 1 435 288
- EP-A2- 1 676 696
- DE-A1- 3 013 231
- DE-A1-102010 003 368

## Beschreibung

Die Erfindung betrifft eine Doppelbandpresse mit zumindest einer Pressvorrichtung, wobei die Pressvorrichtung zumindest eine Pressplatte und zumindest ein Gegendruckelement für die Pressplatte aufweist, wobei die zumindest eine Pressplatte und das zumindest eine Gegendruckelement voneinander beabstandet angeordnet sind, wobei Abschnitte eines ersten endlosen und angetriebenen Metallbandes und eines zweiten endlosen und angetriebenen Metallbandes einander gegenüberliegend durch einen zwischen einander zugewandten Seiten der Pressplatte und des Gegendruckelements liegenden Pressspalt hindurch geführt sind gemäß dem Oberbegriff von Anspruch 1.

Eine einschlägige Doppelbandpresse ist aus der AT516907A1 bekannt geworden. Aus der EP 1 435 288 ist eine Doppelbandpresse gemäss dem Oberbegriff des Anspruchs 1 bekannt geworden.

Bei der Herstellung von Laminaten aus Kompositwerkstoffen, beispielsweise folienförmigen Laminaten aus vorimprägnierten Geweben, Prepreg, textilen Materialien, Faserverbundwerkstoffen etc., sind hohe Drücke erforderlich, um eingeschlossene Luft zu verdrängen und ein porenfreies Laminat zu erhalten. Mit herkömmlichen Doppelbandpressen ist es jedoch nicht möglich, die erforderlichen Druckstärken in dem Pressspalt zu erzeugen, um Lufteinschlüsse aus einem zwischen den beiden Bändern befindlichen Laminat zu pressen, da hierzu aufgrund der Größe herkömmlicher Pressplatten von Doppelbandpressen sehr große Kräfte erforderlich wären, wodurch die Gefahr besteht, dass die Metallbänder zu stark abgebremst werden und zum Stillstand kommen.

Es ist daher eine Aufgabe der Erfindung, die Nachteile des Stands der Technik zu überwinden und eine kontinuierliche Herstellung von Laminaten aus Kompositwerkstoffen zu ermöglichen.

Diese Aufgabe wird mit einer Doppelbandpresse der eingangsgenannten Art erfindungsgemäß durch die Merkmale des kennzeichnenden Teils von Anspruch 1 gelöst,

Die erfindungsgemäße Lösung ermöglicht aufgrund der Verwendung des Presstempels die Erzeugung sehr hoher Drücke. Aufgrund der im Vergleich zur Pressplatte kleineren Fläche des Pressstempels verringern sich hierbei die auftretenden, normal zu einer Bandoberfläche wirkenden Kräfte entsprechend, wodurch die Gefahr eines zum Stillstand führenden Abbremsen der Metallbänder verringert bzw. ausgeschlossen werden kann. Durch die erfindungsgemäße Ausbildung der Pressvorrichtung wird die Herstellung von Laminaten aus Kompositwerkstoffen mittels einer Doppelbandpresse ermöglicht. Dies hat den Vorteil, dass sich die Laminate kontinuierlich herstellen lassen, wodurch sich die Produktion vereinfacht und wirtschaftlicher gestalten lässt. Zudem können auch Laminate beliebiger Länge hergestellt werden. Durch die Erfindung wird auch der Vorteil erzielt, dass über eine große Breite der Metallbänder im Bereich des Pressspaltes ein sehr hoher Druck erzeugt werden kann. Besonders bevorzugt deckt die Pressfläche die gesamte Produktbreite ab. Es kann weiters vorgesehen sein, dass die Pressfläche sich über die gesamte Bandbreite erstreckt.

Als besonders vorteilhaft hat sich eine Ausführungsform erwiesen, gemäß welcher die zumindest eine Pressplatte zumindest eine Durchgangsöffnung für den zumindest einen Pressstempel aufweist, wobei der zumindest eine Pressstempel durch die zumindest eine Pressplatte hindurch verschiebbar gelagert ist. Diese Ausführungsform ermöglicht die Herstellung qualitativ besonders hochwertiger Laminate, da zum einen durch die Pressplatte eine Vorverdichtung des Laminats und durch den Pressstempel eine sehr hohe Verdichtung des Laminats mit einem sehr geringen erforderlichen Bauraum erzielt werden kann. Weiters kann durch die Kombination der Pressplatte mit einem Pressstempel auch verhindert werden, dass es zu einem Verwerfen von Material unmittelbar vor dem Pressstempel kommt, da die Pressplatte ein Ausweichen des zu verpressenden Materials in einer Richtung normal zur Bandoberfläche verhindert.

Eine separate Betätigung von Pressplatte und Pressstempel sowie die Realisierung optimaler Pressverhältnisse lässt sich dadurch erzielen, dass der zumindest eine Presstempel mit zumindest einem ersten Aktor verbunden ist, wobei die Pressplatte mit zumindest einem zweiten von dem ersten Aktor unabhängig betätigten Aktor verbunden ist.

Gemäß einer bevorzugten Ausführungsform, die sich durch eine kompakte Bauweise auszeichnet und sehr vorteilhaft für eine effiziente Kraftübertragung auf den Pressstempel ist, kann es vorgesehen sein, dass der zumindest eine Pressstempel an einem in Bandquerrichtung der beiden Metallbänder betrachtet seitlich über die zumindest eine Pressplatte hinausragenden Rahmen gelagert ist.

Die Erzielung einer guten Kraftübertragung auf den Pressstempel bei einem kompakten Bauraum wird dadurch begünstigt, dass der zumindest eine erste Aktor an einen in Bandquerrichtung der beiden Metallbänder betrachtet über die Pressplatte seitlich hinausragenden Abschnitt des Rahmens angelenkt ist.

Eine optimale Kraftübertragung lässt sich dadurch erzielen, dass ein unmittelbar über dem Pressstempel angeordneter Abschnitt des Rahmens mechanisch steifer ausgebildet ist als ein seitlich über die Pressplatte hinausragende Abschnitt des Rahmens.

Ein möglichst gutes und reibungsarmes Gleiten der Metallbänder durch die Pressvorrichtung kann dadurch erzielt werden, dass an der zumindest einen Pressplatte und der zumindest einen Pressfläche des Pressstempels und an dem zumindest einen Gegendruckelement je zumindest eine mit einem Oberflächenabschnitt eines der beiden Metallbänder in Berührung kommende Gleitfläche angeordnet ist.

Um einen optimalen Wärmeeintrag in das Laminat zu erzielen, kann es vorgesehen sein, dass an der zumindest einen Pressplatte zumindest eine Heizplatte angeordnet ist, wobei zwischen der zumindest einen Heizplatte und der zumindest einen Pressplatte zumindest eine Isolierschicht angeordnet ist, wobei die zumindest eine Heizplatte und die zumindest eine Isolierschicht je zumindest eine, mit der zumindest einen Durchtrittsöffnung der Pressplatte korrespondierende Durchtrittsöffnung für den zumindest einen Pressstempel aufweisen und/oder an dem zumindest einen Gegendruckelement zumindest eine Heizplatte angeordnet ist, wobei zwischen dem zumindest einen Gegendruckelement und der zumindest einen an dem zumindest einen Gegendruckelement angeordneten Heizplatte zumindest eine Isolierschicht angeordnet ist und/oder der zumindest eine Pressstempel zumindest eine Isolierschicht aufweist. Durch die Anordnung einer Isolierschicht lässt sich eine Erwärmung der Pressplatte und/oder des Gegendruckelements und/oder des Pressstempels deutlich verringern, wodurch beispielsweise thermisch induzierte Formänderungen derselben vermieden werden können.

Gemäß einer bevorzugten Ausführungsform der Erfindung kann es vorgesehen sein, dass entlang einer quer zu der Bandbreite der beiden Metallbänder verlaufenden Längsrichtung des Pressspaltes zumindest zwei, bevorzugt zumindest drei, Pressstempel hintereinander angeordnet sind. Bei dieser Variante der Erfindung kann ein Verlauf des Pressdruckes in dem Pressspalt optimal eingestellt werden. So kann der Druck in Flussrichtung beispielsweise zunehmen, um einen immer höheren Verdichtungsgrad zu erzielen.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Doppelbandpresse;
- Fig. 2: eine Draufsicht auf eine Pressplatte der Doppelbandpresse aus Fig. 1;
- Fig. 3: einen Querschnitt entlang der Linie III-III in Fig. 1;
- Fig. 4: einen Querschnitt durch eine Pressvorrichtung gemäß einer Variante der Erfin-dung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

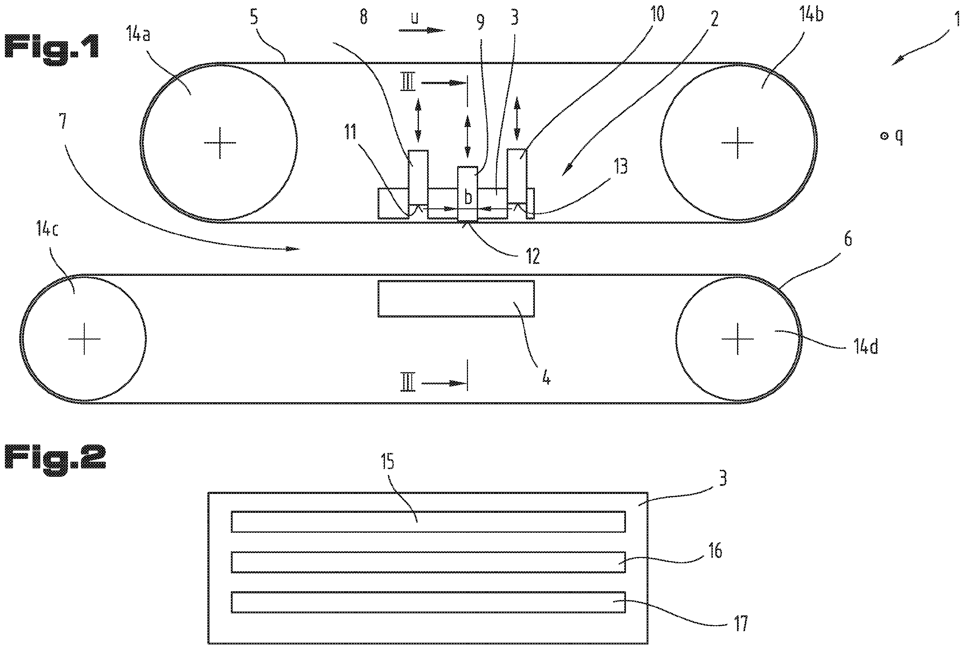

Gemäß Fig. 1 weist eine erfindungsgemäße Doppelbandpresse 1 eine Pressvorrichtung 2 auf. Die Pressvorrichtung 2 ist als Gleitpresse bzw. Gleitpressmodul ausgeführt und weist eine Pressplatte 3 und ein Gegendruckelement 4 für die Pressplatte 3 auf. Das Gegendruckelement 4 kann beispielsweise ebenfalls plattenförmig ausgebildet sein. Die Pressplatte 3 und das Gegendruckelement 4 sind voneinander beabstandet angeordnet. Abschnitte eines ersten endlosen und angetriebenen Metallbandes 5 und eines zweiten endlosen und angetriebenen Metallbandes 6 sind einander gegenüberliegend durch einen zwischen einander zugewandten Seiten der Pressplatte 3 und des plattenförmigen Gegendruckelements 4 liegenden Pressspalt 7 hindurch geführt. Die Pressvorrichtung 2 weist in Richtung des Gegendruckelements 4 und wieder zurück bewegbar gelagerte Pressstempel 8, 9, 10 mit je einer Pressfläche 11, 12, 13 auf. Die Bewegungsrichtungen der Pressstempel 8, 9, 10 sind in Fig. 1 mit Doppelpfeilen gekennzeichnet.

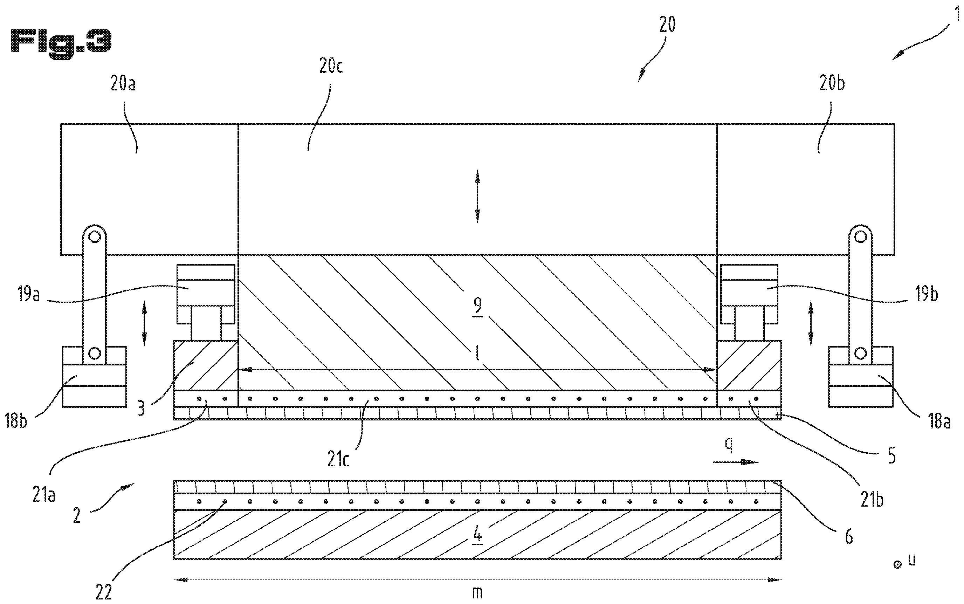

Die Pressstempel 8, 9, 10 sind entlang einer quer zu einer in Fig. 3 mit m bezeichneten Bandbreite der beiden Metallbänder verlaufenden Längsrichtung des Pressspaltes 7 hintereinander angeordnet.

Die durch den Pressspalt 7 geführten Abschnitte des ersten und des zweiten endlosen Metallbandes 5, 6 sind zwischen den Pressflächen 11, 12, 13 der Pressstempels 8, 9, 10 dem Gegendruckelement 4 hindurchgeführt. Die Pressflächen 11, 12, 13 des Pressstempels 8, 9, 10 sind kleiner als eine Fläche der dem zumindest einen Gegendruckelement 4 zugewandten Seite der Pressplatte 3.

Der Vollständigkeit halber sei erwähnt, dass jedes der Metallbänder 5, 6 in an sich bekannter Weise zwischen zwei Rollen 14a, 14b, 14c, 14d umlaufend angeordnet ist, wobei zumindest eine der zwei Rollen 14a, 14b, 14c, 14d, zwischen welchen eines der Metallbänder 5, 6 eingespannt ist, angetrieben ist.

Wie aus Fig. 2 zu entnehmen ist, kann die Pressplatte 3 Durchgangsöffnungen 15, 16, 17 für die Pressstempel 8, 9, 10 aufweisen. Die Pressstempel 8, 9, 10 sind durch die Pressplatte 3 hindurch verschiebbar gelagert.

Eine in Fig. 3 mit 1 bezeichnete Länge der Pressfläche des Pressstempels 9 ist in einer Bandquerrichtung q der beiden Metallbänder 5, 6 betrachtet größer als eine in Fig. 1 mit b bezeichnete Breite der Pressfläche des Pressstempels 9 in Umfangsrichtung u der beiden Metallbänder 5, 6 betrachtet. An dieser Stelle sei darauf hingewiesen, dass die Presstempel 8, 9, 10 gleichartig ausgebildet sind, sodass sämtliche Ausführungen in diesem Dokument hinsichtlich des Pressstempels 9 auch für alle anderen Pressstempel 8, 10 zutreffen.

Die Länge 1 der Pressfläche des Pressstempels 9 beträgt zumindest zwei Drittel einer Bandbreite m der Metallbänder 5, 6. In Bandquerrichtung q der beiden Metallbänder 5, 6 betrachtet überspannt die Pressfläche zumindest einen eine Bandmitte und einen beidseitig der Bandmitte an diese unmittelbar anschließenden gelegenen Bandbereich jedes der beiden Metallbänder 5, 6. Vorzugsweise erstreckt sich die Länge 1 der Pressfläche über die gesamte Bandbreite m. In diesem Fall können die Pressplatte 3 und das Gegendruckelement 4 seitlich über die Bandbreite m hinausragen.

Der Presstempel 9 kann mit ersten Aktoren 18a, 18b verbunden sein, während die Pressplatte 3 mit zweiten von den ersten Aktoren 18a, 18b unabhängigen Aktoren 19a, 19b verbunden ist. Durch Betätigen der Aktoren 18a, 18b, 19a, 19b wird der Pressspalt 7 verringert und die Pressplatte 3 bzw. der Pressstempel 9 gegen das Gegendruckelement 4, welches ortsfest angeordnet sein kann, gepresst. Die Bewegungsrichtungen der Pressplatte 3 sowie des Pressstempels 9 sind in Fig. 3 mit Doppelpfeilen gekennzeichnet.

Die Aktoren 18a, 18b, 19a, 19b können beispielsweise Elektromotoren, mechanische, elektromechanische pneumatische oder hydraulische Aktoren sein. Bevorzugt sind die Aktoren 18a, 18b, 19a, 19b als Kolben/Zylindereinheiten, insbesondere als Hydraulikzylinder, ausgebildet.

Wie aus Fig. 3 weiters zu entnehmen ist, kann der Pressstempel 9 an einem in Bandquerrichtung q der beiden Metallbänder 5, 6 betrachtet seitlich über die zumindest eine Pressplatte 3 hinausragenden Rahmen 20 gelagert sein. Die Aktoren 18a, 18b können hierbei an einen in Bandquerrichtung q der beiden Metallbänder 5, 6 betrachtet über die Pressplatte 3 seitlich hinausragenden Abschnitt 20a, 20b des Rahmens 20 angelenkt sein. Durch Betätigung der Aktoren 18a, 18b kann der Rahmen 20 mit dem Pressstempel 9 in die mittels Doppelpfeil gekennzeichneten Richtungen bewegt werden.

Besonders bevorzugt ist ein unmittelbar über dem Pressstempel 9 angeordneter Abschnitt 20c des Rahmens 20 mechanisch steifer ausgebildet als ein seitlich über die Pressplatte 3 hinausragende Abschnitt 20a, 20b des Rahmens 20.

Falls die Aktoren 18a, 18b als Kolben/Zylindereinheiten ausgebildet sind, sind die Kolben der Kolben/Zylindereinheiten bevorzugt mit dem seitlich überragenden Abschnitt des Rahmens 20 verbunden und Arbeitszylinder der Kolben/Zylindereinheiten sind unter den jeweils zugehörigen Kolben angeordnet und abgestützt.

Die Aktoren 18a, 18b, 19a, 19b können beispielsweise servohydraulisch oder digitalhydraulisch angesteuert sein. Hierbei können die Hydraulikzylinder jeweils über Pumpelemente mit einem exakt definierten, voneinander kaum abweichenden Volumeninhalt gespeist werden. Ein Pumpeninhalt stellt ein "(Öl)-Inkrement" dar, wodurch der Gleichlauf der Kolben/Zylindereinheiten durch gleiche Volumeninhalte in der Speisung gewährleistet wird. Auftretende Summentoleranzfehler und gegebenenfalls Leckagen können zyklisch durch ein Rücksetzen in einer Grundposition geringgehalten werden.

An der Pressplatte 3 und der Pressfläche des Pressstempels 9 sowie an dem Gegendruckelement 4 kann jeweils eine mit einem Oberflächenabschnitt eines der beiden Metallbänder 5, 6 in Berührung kommende Gleitfläche 21a, 21b, 21c, 22 angeordnet sein.

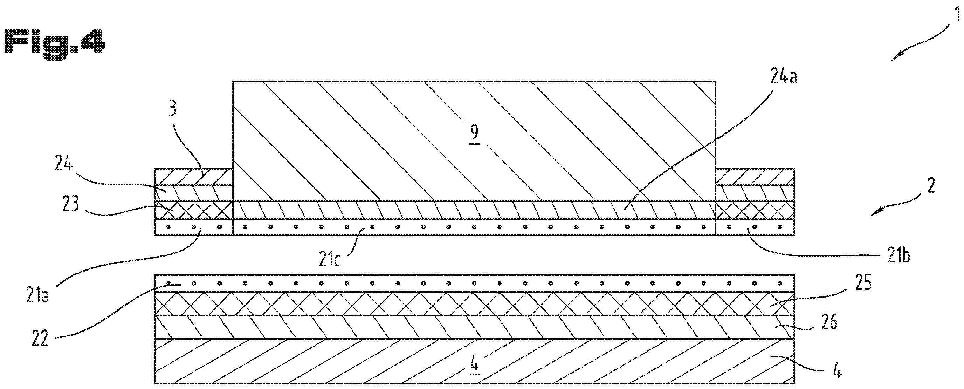

Weiters kann gemäß Fig. 4 an der Pressplatte 3 eine Heizplatte 23 angeordnet sein. Zwischen der Heizplatte 23 und der Pressplatte 3 kann eine Isolierschicht 24 vorhanden sein. Die Heizplatte 23 und die Isolierschicht 24 weisen mit den Durchtrittsöffnungen 15, 16, 17 der Pressplatte 3 korrespondierende Durchtrittsöffnungen für die Pressstempel 8, 9, 10 auf. Weiters kann an dem Gegendruckelement 4 ebenfalls eine Heizplatte 25 angeordnet sein. Zwischen dem Gegendruckelement 4 und der Heizplatte 25 kann ebenfalls eine Isolierschicht 26 vorhanden sein. Weiters kann auch der Pressstempel 9 bzw. jeder der Pressstempel 8, 9, 10 eine Isolierschicht 24a aufweisen, um eine thermische Verformung der Pressstempel zu verhindern.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Doppelbandpresse
- 2: Pressvorrichtung
- 3: Pressplatte
- 4: Gegendruckelement
- 5: Metallband
- 6: Metallband
- 7: Pressspalt
- 8: Pressstempel
- 9: Pressstempel
- 10: Pressstempel
- 11: Pressfläche
- 12: Pressfläche
- 13: Pressfläche
- 14a- d: Rolle
- 15: Durchgangsöffnung
- 16: Durchgangsöffnung
- 17: Durchgangsöffnung
- 18a, b: Aktor
- 19a, c: Aktor
- 20: Rahmen
- 20a - c: Abschnitt
- 21a- c: Gleitfläche
- 22: Gleitfläche
- 23: Heizplatte
- 24: Isolierschicht
- 24a: Isolierschicht
- 25: Heizplatte
- 26: Isolierschicht

## Patentansprüche

1. Doppelbandpresse (1) mit zumindest einer Pressvorrichtung (2), wobei die Pressvorrichtung (2) zumindest eine Pressplatte (3) und zumindest ein Gegendruckelement (4) für die Pressplatte (3) aufweist, wobei die zumindest eine Pressplatte (3) und das zumindest eine Gegendruckelement (4) voneinander beabstandet angeordnet sind, wobei Abschnitte eines ersten endlosen und angetriebenen Metallbandes (5) und eines zweiten endlosen und angetriebenen Metallbandes (6) einander gegenüberliegend durch einen zwischen einander zugewandten Seiten der Pressplatte (3) und des plattenförmigen Gegendruckelements (4) liegenden Pressspalt (7) hindurch geführt sind, wobei die Pressvorrichtung (2) zumindest einen in Richtung des Gegendruckelements und wieder zurück bewegbar gelagerten Pressstempel (8, 9, 10) mit einer Pressfläche (11, 12, 13) aufweist, wobei die durch den Pressspalt (7) geführten Abschnitte des ersten und des zweiten endlosen Metallbandes (5, 6) zwischen der Pressfläche (11, 12, 13) des zumindest einen Pressstempels (8, 9, 10) und dem zumindest einen Gegendruckelement (4) hindurch geführt sind und die Pressfläche (11, 12, 13) des Pressstempels (8, 9, 10) kleiner ist als eine Fläche der dem zumindest einen Gegendruckelement (4) zugewandten Seite der zumindest einen Pressplatte (3), **dadurch gekennzeichnet, dass** eine Länge (1) der Pressfläche des zumindest einen Pressstempels (8, 9, 10) in einer Bandquerrichtung (q) der beiden Metallbänder (5, 6) betrachtet größer ist als eine Breite der Pressfläche des zumindest einen Pressstempels in Umfangsrichtung (u) der beiden Metallbänder (5, 6) betrachtet, wobei die Länge (1) der Pressfläche (11, 12, 13) des zumindest einen Pressstempel (8, 9, 10) zumindest zwei Drittel einer Bandbreite (m) der Metallbänder (5, 6) beträgt und die Pressfläche (11, 12, 13) in Bandquerrichtung (q) der beiden Metallbänder (5, 6) betrachtet zumindest einen eine Bandmitte und einen beidseitig der Bandmitte an diese unmittelbar anschließenden gelegenen Bandbereich jedes der beiden Metallbänder (5, 6) überdeckt.

2. Doppelbandpresse nach Anspruch 1, **dadurch gekennzeichnet, dass** die zumindest eine Pressplatte (3) zumindest eine Durchgangsöffnung (15, 16, 17) für den zumindest einen Pressstempel (8, 9, 10) aufweist, wobei der zumindest eine Pressstempel (8, 9, 10) durch die zumindest eine Pressplatte (3) hindurch verschiebbar gelagert ist.

3. Doppelbandpresse nach einem der Ansprüche 1 bis 2, **dadurch gekennzeichnet, dass** der zumindest eine Presstempel (8, 9, 10) mit zumindest einem ersten Aktor (18a, 18b) verbunden ist, wobei die Pressplatte (3) mit zumindest einem zweiten von dem ersten Aktor (18a, 18b) unabhängig betätigten Aktor (19a, 19b) verbunden ist.

4. Doppelbandpresse nach einem der Ansprüche 1 bis 3, **dadurch gekennzeichnet, dass** der zumindest eine Pressstempel (8, 9, 10) an einem in Bandquerrichtung (q) der beiden Metallbänder (5, 6) betrachtet seitlich über die zumindest eine Pressplatte (3) hinausragenden Rahmen (20) gelagert ist.

5. Doppelbandpresse nach Anspruch 3 und 4, **dadurch gekennzeichnet, dass** der zumindest eine erste Aktor (18a, 18b) an einen in Bandquerrichtung (q) der beiden Metallbänder (5, 6) betrachtet über die Pressplatte (3) seitlich hinausragenden Abschnitt (20a, 20b) des Rahmens (20) angelenkt ist.

6. Doppelbandpresse nach einem der Ansprüche 3 bis 5, **dadurch gekennzeichnet, dass** ein unmittelbar über dem Pressstempel (8, 9, 10) angeordneter Abschnitt (20c) des Rahmens (20) mechanisch steifer ausgebildet ist als ein seitlich über die Pressplatte (3) hinausragende Abschnitt (20a, 20b) des Rahmens (20).

7. Doppelbandpresse nach einem der Ansprüche 1 bis 6, **dadurch gekennzeichnet, dass** an der zumindest einen Pressplatte (3) und der zumindest einen Pressfläche (11. 12. 13) des Pressstempels (8, 9, 10) und an dem zumindest einen Gegendruckelement (4) je zumindest eine mit einem Oberflächenabschnitt eines der beiden Metallbänder (5, 6) in Berührung kommende Gleitfläche (21a, 21b, 21c, 22) angeordnet ist.

8. Doppelbandpresse nach einem der Ansprüche 2 bis 7, **dadurch gekennzeichnet, dass** an der zumindest einen Pressplatte (3) zumindest eine Heizplatte (23) angeordnet ist, wobei zwischen der zumindest einen Heizplatte (23) und der zumindest einen Pressplatte (3) zumindest eine Isolierschicht (24) angeordnet ist, wobei die zumindest eine Heizplatte (23) und die zumindest eine Isolierschicht (24) je zumindest eine, mit der zumindest einen DurchtrittsÖffnung (15, 16, 17) der Pressplatte (3) korrespondierende Durchtrittsöffnung für den zumindest einen Pressstempel (8, 9, 10) aufweisen und/oder an dem zumindest einen Gegendruckelement (4) zumindest eine Heizplatte (25) angeordnet ist, wobei zwischen dem zumindest einen Gegendruckelement (4) und der zumindest einen an dem zumindest einen Gegendruckelement (4) angeordneten Heizplatte (25) zumindest eine Isolierschicht (26) angeordnet ist und/oder der zumindest eine Pressstempel (2) zumindest eine Isolierschicht (24a) aufweist.

9. Doppelbandpresse nach einem der Ansprüche 1 bis 8, **dadurch gekennzeichnet, dass** entlang einer quer zu der Bandbreite (m) der beiden Metallbänder verlaufenden Längsrichtung des Pressspaltes (7) zumindest zwei, bevorzugt zumindest drei, Pressstempel (8, 9, 10) hintereinander angeordnet sind.

## Claims

1. A double belt press (1) having at least one press device (2), wherein the press device (2) has at least one pressing plate (3) and at least one counter-pressure element (4) for the pressing plate (3), wherein the at least one pressing plate (3) and the at least one counter-pressure element (4) are arranged so as to be spaced apart from one another, wherein portions of a first endless and driven metal belt (5) and of a second endless and driven metal belt (6) are guided, opposite one another, through a press gap (7) located between sides of the pressing plate (3) facing one another and the plate-shaped counter-pressure element (4), wherein the press device (2) has at least one pressing stamp (8, 9 10) having a pressing surface (11, 12, 13), mounted so as to be movable in the direction of the counter-pressure element and back again, wherein the portions of the first and the second endless metal belt (5, 6) guided through the press gap (7) are guided between the pressing surface (11, 12, 13) of the at least one pressing stamp (8, 9, 10) and the at least one counter-pressure element (4), and the pressing surface (11, 12, 13) of the pressing stamp (8, 9, 10) is smaller than a surface of the side of the at least one pressing plate (3) facing the at least one counter-pressure element (4), **characterized in that** a length (1) of the pressing surface of the at least one pressing stamp (8, 9, 10) is larger, when viewed in a belt transverse direction (q) of the two metal belts (5, 6), than a width of the pressing surface of the at least one pressing stamp in the circumferential direction (u) of the two metal belts (5, 6), wherein the length (1) of the pressing surface (11, 12, 13) of the at least one pressing stamp (8, 9, 10) is at least two thirds of a belt width (m) of the metal belts (5, 6), and the pressing surface (11, 12, 13), when viewed in the belt transverse direction (q) of the two metal belts (5, 6), covers at least one belt center and a belt region of both of the metal belts (5, 6) located on both sides of the belt center so as to be directly adjacent to the belt center.

2. The double belt press according to claim 1, **characterized in that** the at least one pressing plate (3) has at least one passage (15, 16, 17) for the at least one pressing stamp (8, 9, 10), wherein the at least one pressing stamp (8, 9, 10) is mounted so as to be displaceable through the at least one pressing plate (3).

3. The double belt press according to one of claims 1 to 2, **characterized in that** the at least one pressing stamp (8, 9, 10) is connected to at least one first actuator (18a, 18b), wherein the pressing plate (3) is connected to a second actuator (19a, 19b) which actuated independently of the first actuator (18a, 18b).

4. The double belt press according to one of claims 1 to 3, **characterized in that** the at least one pressing stamp (8, 9, 10) is mounted on a frame (20) protruding laterally beyond the at least one pressing plate (3) when viewed in the belt transverse direction (q) of the two metal belts (5, 6).

5. The double belt press according to claims 3 and 4, **characterized in that** the at least one actuator (18a, 18b) is hinged to a section (20a, 20b) of the frame (20) protruding laterally beyond the pressing plate (3) when viewed in the belt transverse direction (q) of the two metal belts (5, 6).

6. The double belt press according to one of claims 3 to 5, **characterized in that** a section (20c) of the frame (20) arranged directly above the pressing stamp (8, 9, 10) is formed to be mechanically more rigid than a section (20a, 20b) of the frame (20) protruding laterally beyond the pressing plate (3).

7. The double belt press according to one of claims 1 to 6, **characterized in that** at least one sliding surface (21a, 21b, 21c, 22) each, coming into contact with a surface section of one of the two metal belts (5, 6), is arranged on the at least one pressing plate (3) and the at least one pressing surface (11, 12, 13) of the pressing stamp (8, 9, 10) and on the at least one counter-pressure element (4).

8. The double belt press according to one of claims 2 to 7, **characterized in that** at least one heating plate (23) is arranged on the at least one pressing plate (3), wherein at least one insulation layer (24) is arranged between the at least one heating plate (23) and the at least one pressing plate (3), wherein the at least one heating plate (23) and the at least one insulation layer (24) both have at least one passage for the at least one pressing stamp (8, 9, 10), which passage corresponds with the at least one passage (15, 16, 17) of the pressing plate (3), and/or a heating plate (25) is arranged on the at least one counter-pressure element (4), wherein at least one insulation layer (26) is arranged between the at least one counter-pressure element (4) and the at least one heating plate (25) arranged on the at least one counter-pressure element (4), and/or the at least one pressing stamp (2) has at least one insulation layer (24a).

9. The double belt press according to one of claims 1 to 8, characterized that at least two, preferably at least three, pressing stamps (8, 9, 10) are arranged one after the other along a longitudinal direction of the press gap (7) running transversely to the belt width (m) of the two metal belts.

## Revendications

1. Presse à double bande (1) avec au moins un dispositif de presse (2), dans laquelle le dispositif de presse (2) comprend au moins une plaque de presse (3) et au moins un élément de contre-pression (4) pour la plaque de presse (3), dans laquelle l'au moins une plaque de presse (3) et l'au moins un élément de contre-pression (4) sont disposés à distance l'un de l'autre, dans laquelle des portions d'une première bande métallique sans fin et entraînée (5) et d'une deuxième bande métallique sans fin et entraînée (6) sont guidées l'une face à l'autre à travers un interstice de presse (7) se trouvant entre des faces orientées l'une vers l'autre de la plaque de presse (3) et de l'élément de contre-pression (4) en forme de plaque, dans laquelle le dispositif de presse (2) comprend au moins un poinçon de presse (8, 9, 10) logé de manière mobile en direction de l'élément de contre-pression et retour, avec une surface de presse (11, 12, 13), dans laquelle les portions, guidées à travers l'interstice de presse (7), des première et deuxième bandes métalliques sans fin (5, 6) sont guidées entre la surface de presse (11, 12, 13) de l'au moins un poinçon de presse (8, 9, 10) et l'au moins un élément de contre-pression (4) et la surface de presse (11, 12, 13) du poinçon de presse (8, 9, 10) est plus petite qu'une surface de la face, orientée vers l'au moins un élément de contre-pression (4), de l'au moins une plaque de presse (3), **caractérisée en ce qu'**une longueur (1) de la surface de presse de l'au moins un poinçon de presse (8, 9, 10), vue dans une direction transversale de bande (q) des deux bandes métalliques (5, 6), est plus grande qu'une largeur de la surface de presse de l'au moins un poinçon de presse, vue dans la direction circonférentielle (u) des deux bandes métalliques (5, 6), dans laquelle la longueur (1) de la surface de presse (11, 12, 13) de l'au moins un poinçon de presse (8, 9, 10) représente au moins deux tiers d'une largeur de bande (m) des bandes métalliques (5,6) et la surface de presse (11, 12, 13), vue dans la direction transversale de bande (q) des deux bandes métalliques (5, 6), recouvre au moins un centre de bande et une partie de bande, située des deux côtés du centre de bande et suivant immédiatement celui-ci, de chacun des deux bandes métalliques (5, 6).

2. Presse à double bande selon la revendication 1, **caractérisée en ce que** l'au moins une plaque de presse (3) comprend au moins une ouverture de passage (15, 16, 17) pour l'au moins un poinçon de presse (8, 9, 10), dans laquelle l'au moins un poinçon de presse (8, 9, 10) est logé de manière coulissante à travers l'au moins une plaque de presse (3).

3. Presse à double bande selon l'une des revendications 1 à 2, **caractérisée en ce que** l'au moins un poinçon de presse (8, 9, 10) est relié avec au moins un premier actionneur (18a, 18b), dans laquelle la plaque de presse (3) est reliée avec au moins un deuxième actionneur (19a, 19b) actionné indépendamment du premier actionneur (18a, 18b).

4. Presse à double bande selon l'une des revendications 1 à 3, **caractérisée en ce que** l'au moins un poinçon de presse (8, 9, 10) est logé au niveau d'un châssis (20) dépassant latéralement, vu dans la direction transversale de bande (q) des deux bandes métalliques (5, 6), de l'au moins une plaque de presse (3).

5. Presse à double bande selon la revendication 3 et 4, **caractérisée en ce que** l'au moins un premier actionneur (18a, 18b) est articulé, vu dans la direction transversale de bande (q) des deux bandes métalliques (5, 6), au niveau d'une portion (20a, 20b) du châssis (20) dépassant latéralement de la plaque de presse (3).

6. Presse à double bande selon l'une des revendications 3 à 5, **caractérisée en ce qu'**une portion (20c), disposée immédiatement au-dessus du poinçon de presse (8, 9, 10), du châssis (20), est plus rigide qu'une portion (20a, 20b) du châssis (20) dépassant latéralement de la plaque de presse (3).

7. Presse à double bande selon l'une des revendications 1 à 6, **caractérisée en ce que**, sur l'au moins une plaque de presse (3) et l'au moins une surface de presse (11, 12, 13) du poinçon de presse (8, 9, 10) et sur l'au moins un élément de contre-pression (4), est disposée respectivement une surface de glissement (21a, 21b, 21c, 22) entrant en contact avec une portion de surface d'une des deux bandes métalliques (5, 6).

8. Presse à double bande selon l'une des revendications 2 à 7, **caractérisée en ce que**, sur l'au moins une plaque de presse (3), est disposée une plaque chauffante (23), dans laquelle, entre l'au moins une plaque chauffante (23) et l'au moins une plaque de presse (3), est disposée au moins une couche isolante (24), dans laquelle l'au moins une plaque chauffante (23) et l'au moins une couche isolante (24) comprennent respectivement au moins une ouverture de passage correspondant à l'au moins une ouverture de passage (15, 16, 17) de la plaque de presse (3), pour l'au moins un poinçon de presse (8, 9, 10) et/ou, sur l'au moins un élément de contre-pression (4), est disposée au moins une plaque chauffante (25), dans laquelle, entre l'au moins un élément de contre-pression (4) et l'au moins une plaque chauffante (25) disposée sur l'au moins un élément de contre-pression (4), est disposée au moins une couche isolante (26) et/ou l'au moins un poinçon de presse (2) comprend au moins une couche isolante (24a).

9. Presse à double bande selon l'une des revendications 1 à 8, **caractérisée en ce que**, le long d'une direction longitudinale de l'interstice de presse (7), s'étendant transversalement par rapport à la largeur de bande (m) des deux bandes métalliques, sont disposés, l'un derrière l'autre, deux, de préférence au moins trois poinçons de presse (8, 9, 10).
